(19) Europäisches Patentamt

European Patent Office

Office européen des brevets

(11) **EP 0 646 404 B1**

(12) **EUROPÄISCHE PATENTSCHRIFT**

(45) Veröffentlichungstag und Bekanntmachung des Hinweises auf die Patenterteilung:
**12.03.1997 Patentblatt 1997/11**

(51) Int. Cl.$^6$: **B01D 53/34**, B01D 53/50, B01D 53/68

(21) Anmeldenummer: **94115099.7**

(22) Anmeldetag: **24.09.1994**

(54) **Verfahren zur trockenen oder quasitrockenen Reinigung von Rauchgasen aus der Abfallverbrennung**

Process for dry or semi-dry purification of refuse incineration flue gases

Procédé pour la purification séche ou semi-séche de gaz de fumée provenant de l'incinération de déchets

(84) Benannte Vertragsstaaten:
**BE DE DK ES FR GB IT LU NL SE**

(30) Priorität: **01.10.1993 DE 4333481**

(43) Veröffentlichungstag der Anmeldung:
**05.04.1995 Patentblatt 1995/14**

(73) Patentinhaber: **ABB PATENT GmbH D-68309 Mannheim (DE)**

(72) Erfinder: **Gottschalk, Jürgen, Dr. D-35510 Butzbach (DE)**

(74) Vertreter: **Rupprecht, Klaus, Dipl.-Ing. et al c/o ABB Patent GmbH, Postfach 10 03 51 68128 Mannheim (DE)**

(56) Entgegenhaltungen:
**EP-A- 0 103 881      EP-A- 0 173 403
EP-A- 0 296 500      WO-A-94/20199
US-A- 4 322 224**

Printed by Rank Xerox (UK) Business Services
2.13.17/3.4

**Beschreibung**

Die Erfindung betrifft ein Verfahren zur trockenen oder quasitrockenen Reinigung von Rauchgas aus der Abfallverbrennung, insbesondere ein Verfahren zur Abscheidung von Chlorwasserstoff oder Chlorwasserstoff und anderen sauren Bestandteilen aus dem Rauchgas, wie Schwefelverbindungen, z. B. Schwefeldioxid, unter Zugabe von kalkhaltigen Neutralisationsmitteln, vorzugsweise von Ca(OH)$_2$.

Während bei den nassen Verfahren zur Rauchgasreinigung, z. B. gemäß DE C 34 33 759, das schadstoffbeladene Abgas aus dem Verbrennungsprozeß sogenannten Wäschern zugeführt wird, unter deren Einwirkung die im Abgas enthaltenen Schadstoffe herausgewaschen werden, ggf. unter Zufügung von NaOH, um vorhandenes Kalzium-Chlorid in NaCl umzuwandeln, um so die Verschlechterung der Entschwefelungsleistung zu verhindern, wird die trockene Rauchgasreinigung durch Zuführung von absorbierenden Stoffen in den Rauchgasstrom durchgeführt, welche als Neutralisationsmittel zur Abscheidung von sauren Bestandteilen des Rauchgases, insbesondere von Schwefeldioxid, Chlorwasserstoff und Fluorwasserstoff, dienen.

Wie aus der EP-B-0 104 335, welche ein sogenanntes Naß-Trockenes Verfahren betrifft, hervorgeht, besteht ein schwerer Nachteil des trockenen Verfahrens darin, daß eine befriedigende Abscheideleistung, wenn überhaupt, nur durch Einsatz einer Menge an neutralisierendem Reaktionsmittel erreichbar ist, die das stöchiometrische Verhältnis um ein mehrfaches übersteigt. Dadurch ergibt sich eine Kostensteigerung, die in vielen Fällen untragbar ist.

Um diesem Nachteil zu begegnen, der überdies durch die Tatsache verstärkt wird, daß nur ca. 7 bis 15 % des Trockenstoffes für die Sorption der Schadgase wirksam sind, wird die Abhilfe darin gesehen, daß das nur teilweise ausreagierte trockene Reaktionsmittel ebenso wie das verbliebene Schadgas mit dem Abgasstrom in einer weiteren Stufe angefeuchtet wird. Hierdurch soll eine erneute Reaktion des zugegebenen Reaktionsmittels mit den Schadgasen erreicht werden.

Bei der trockenen und quasitrockenen Reinigung von Rauchgasen aus der Abfallverbrennung werden üblicherweise calciumhaltige, basische Additive als Neutralisationsmittel zugegeben, z. B. Calciumhydroxid-Pulver oder zerstäubte Kalkmilch, die zusammen mit dem im Rauchgas enthaltenen Chlorwasserstoff (HCl) zu Calciumchlorid (CaCl$_2$) reagieren, das bekanntermaßen stark hygroskopisch ist. Sowohl bei der im sogenannten Naß-Trockenen Verfahren vorgesehenen Nachfeuchtung des Abgasstroms als auch bei zu tiefen Prozeßtemperaturen kann es zu einer Überfeuchtung oder Vernässung des CaCl$_2$ kommen, was zu Anbackungen bis hin zu Verstopfungen im Rauchgasweg führen kann.

Andererseits fördert die Hygroskopie des Calciumchlorids die Abscheidung des Schwefeldioxids, indem der sich auf dem CaCl$_2$ bildenende Wasserfilm gewissermaßen wie ein Katalysator für die SO$_2$-Abscheidung wirkt.

Das Calciumchlorid liegt dabei meist in pulvriger Form vor und erweist sich als stark hygroskopisch, was zur Folge hat, daß sich auf der Oberfläche der Chloridteilchen Wassermoleküle anlagern, die ihrerseits wiederum Calciumhydroxid und Schwefeldioxid lösen, so daß Calciumsulfit bzw. Calciumsulfat als Reaktionsprodukt entsteht.

Enthält das Abgas kein oder nur wenig HCl, muß das Rauchgas auf eine Temperatur in der Nähe des Wassertaupunktes abgekühlt werden, um eine befriedigende SO$_2$-Abscheidung zu erreichen. In Gegenwart von HCl dagegen ist die SO$_2$-Abscheidung bei höheren Temperaturen von 130 - 150°C einerseits möglich und andererseits notwendig, um die bereits erwähnten Verstopfungen zu vermeiden.

Ein Verfahren, das diese Erkenntnis berücksichtigt, ist in der DE A 42 33 223 vorgeschlagen worden, welche ein Verfahren zur Reinigung von Abgasen aus Abfallverbrennungsanlagen betrifft, bei dem die Trocken- und Quasitrockensorption unter Zusatz von basischen, calciumhaltigen Additiven zur Abscheidung der Schadstoffe im Rauchgas Anwendung findet. Hierbei wird das Rauchgas unter besonderer Berücksichtigung und Ausnutzung der Hygroskopie des Calciumchlorids mit Wasser konditioniert, wodurch eine Verringerung des Verbrauchs an Neutralisationsmittel durch Regelung der Dosiermenge nach den Rohgaswerten, indem das Kalkhydrat mit konstanter Überstöchiometrie von etwa 1,8 bis 2 dosiert wird. Diese dort näher beschriebenen Maßnahmen haben zwar zu einer Verbesserung des Prozesses geführt, sind aber nicht geeignet, die gesetzlich vorgegebenen erhöhten Reinheitsanforderungen für das emittierte Rauchgas zu erfüllen. Dies hat zur Folge, daß die trockene Rauchgasreinigung bei der Abfallverbrennung nur noch bedingt anwendbar ist bzw. durch weitere Reinigungsstufen ergänzt werden muß.

Ausgehend von diesem Stand der Technik ist es Aufgabe der Erfindung, ein Verfahren der eingangs genannten Art zu schaffen, das den Abscheidegrad besonders bei hohen Rauchgasschadstoffgehalten erheblich verbessert sowie weitestmöglich eine weitere Reduzierung des Bedarfs an Neutralisationsmittel tionsmittel ermöglicht. Außerdem soll eine Einrichtung zur Durchführung dieses Verfahrens geschaffen werden.

Erfindungsgemäß wird diese Aufgabe durch die kennzeichnenden Merkmale des Patentanspruchs 1 gelöst. Danach ist vorgesehen, daß die Istwerte des Schadstoffgehalts des Rauchgases sowie dessen Volumenstroms vor der Reinigung bestimmt werden und daß gemäß der Beziehung

$$\dot{m}_N = F((0{,}97 * C_{HCl} * 100/C_{Cl^- \, i.R.}) - C_{HCl} - 0{,}84 \, C_{SO2} - C_{Staub}) * \dot{V} * 10^{-6} \qquad (I)$$

mit:

$\dot{m}_N$ = Dosiermenge an Neutralisationsmittel in kg/h,

$C_{Cl^- i.R.}$ = vorgegebener Chloridgehalt im Reaktionsprodukt (Masse-%),

F = Stoffaktor für $Ca(OH)_2$ = 1; für CaO = 0,76,

$C_{HCl}$ = Konzentration an HCl im Abgas in mg/m³,

$C_{SO2}$ = Konzentration an $SO_2$ im Abgas in mg/m³,

$C_{Staub}$ = Konzentration an Staub im Abgas in mg/m³,

$\dot{V}$ = Volumenstrom des Abgases in m³/h,

in welcher die ermittelten Istwerte berücksichtigt werden, die jeweilige Zugabemenge an Neutralisationsmittel, vorzugsweise an $Ca(OH)_2$, festgelegt wird.

Anhand der vorstehend angegebenen Beziehung, welche als Zielgröße einen bestimmten Chloridgehalt im Reaktionsprodukt sich vorgibt, nämlich vorzugsweise 16 bis 20 Masse-%, wird die Möglichkeit eröffnet, in Abhängigkeit des jeweiligen Schadstoffaufkommens aus der Abfallverbrennung die für die Reinigung des Rauchgases erforderliche Menge an Neutralisationsmittel optimal einzustellen und hiermit einhergehend dessen Verbrauchsmenge zu reduzieren.

Es ist also nun nicht mehr erforderlich, als Prophylaxe ein Überangebot an Neutralisationsmittel bereitzustellen, sonnunmehr ist es möglich, die exakte Bedarfsmenge zu bestimmen. Ein Überangebot an Neutralisationsmittel wirkt sich speziell für die $SO_2$-Abscheidung sogar nachteilig aus, weil die Ausbildung des Wasserfilms auf dem $CaCl_2$ infolge von Wasserentzug durch Aufnahme in das überschüssige Kalkhydrat schlechter wird und außerdem der prozentuale Chloridgehalt im Reaktionsprodukt kleiner wird. Diese erfindungsgemäße Dosierung des Neutralisationsmittels wiederum hat zur Folge, daß die anfallende Menge an Reaktionsprodukt so gering wie irgendmöglich gehalten werden kann, da eine optimale Ausnutzung des zugegebenen Neutralisationsmittels erreicht wird. Dies kann dadurch noch verbessert werden, wenn das Endprodukt aus der Rauchgasreinigung als Rezirkulat vorzugsweise mehrere Male eingesetzt wird.

Gemäß einer bevorzugten Ausführungsform des erfindungsgemäßen Verfahrens ist vorgesehen, daß die Istwerterfassung und die den Istwerten zugeordnete Zugabe des Neutralisationsmittels selbsttätig erfolgen.

Bei der zur Lösung der zugrundeliegenden Aufgabe vorgesehenen Zugabe an Neutralisationsmittel erfolgt die Dosierung von Kalk als Neutralisationsmittel derart, daß im Reaktionsprodukt der Rauchgasreinigung ein $Ca(OH)_2$-Gehalt von 5 bis 25 Masse-%, vorzugsweise von 10 bis 20 Masse-%, sowie ein vorgegebener, gleichbleibender Chloridgehalt ($Cl^-$) von 14 bis 25 Masse-%, vorzugsweise von 16 bis 20 Masse-%, vorliegt. Dazu ist es notwendig, daß im Rauchgas vor dessen Reinigung das Massenverhältnis zwischen Chlorwasserstoff einerseits und Schwefeldioxid andererseits wenigstens 0,8, vorzugsweise aber mehr als 1 beträgt. Bei Anwendung der erfindungsgemäßen Regelung der Kalkzufuhr können in dem aus der Rauchgasreinigung erhaltenen Reaktionsprodukt die vorgenannten Kenngrößen erhalten werden. Diese wiederum sind ein sicheres Indiz für die Wirksamkeit der durchgeführten Rauchgasreinigung.

Um die ebenfalls angegebene Zusatzbedingung bezüglich des Massenverhältnisses von Chlorwasserstoff zu Schwefeldioxid sicher einzuhalten, ist in weiterer Ausgestaltung der Erfindung vorgesehen, daß entsprechend dieser Forderung bedarfsweise dem Rauchgasstrom vor dessen Reinigung Chlorverbindungen, z. B. in Form von Chlorwasserstoff, zugegeben wird, damit die vollständige Abbindung der Schadgase im Rauchgas gewährleistet ist.

In einer besonders günstigen Ausgestaltung des erfindungsgemäßen Verfahrens kann die chlorhaltige Verbindung aus dem Endprodukt der Rauchgasreinigung durch Herauslösen des Calciumchlorids mit Wasser und anschließender Naßfiltration, z. B. mit einer Filterpresse, gewonnen werden. Die erhaltene $CaCl_2$-Lösung wird dann bei Bedarf in den Verbrennungsraum oder in den Reaktor eingedüst.

Wird gemäß der Erfindung das Calciumhydroxid dem Rauchgasstrom nach der Verbrennung und nach der Kühlung des Rauchgases zugeführt, so verbindet sich das Calciumhydroxid aufgrund der niedrigeren Temperatur des Rauchgases mit dem darin enthaltenen Chlorwasserstoff zu Calciumchlorid und darin chemisch gebundenem Kristallwasser ($CaCl_2 * 2H_2O$).

In der weiteren Ausgestaltung des erfindungsgemäßen Verfahrens hat es sich als vorteilhaft erwiesen, insbesondere wenn das Verhältnis von $C_{HCl}$ zu

$$C_{SO_2}$$

größer als zwei ist, die nach Gleichung I berechnete Zugabemenge durch einen vom Verhältnis $C_{HCL}$ zu

$$C_{SO_2}$$

abhängigen Term zu modifizieren.

Die korrigierte Zugabemenge $m_{N,mod.}$ ergibt sich nach der Beziehung

$$\dot{m}_{N,mod.} = \dot{m}_N * \left( \frac{C_{HCl}}{C_{SO_2}} \right)^{-n}, \text{ mit } 0 < n < 1, \qquad (II)$$

vorzugsweise 0,2 - 0,4.

Entsprechend dieser vorteilhaften Ausgestaltung des erfindungsgemäßen Verfahrens ergibt sich, daß die Zugabe der Menge an Neutralisationsmittel, d. h. der Menge an Kalk, der dem Rauchgas zur Bindung der darin enthaltenen Schadstoffe zugegeben wird, in bezug auf die ermittelten Schadstoff-Istwerte im Rauchgas im überstöchiometrischen Verhältnis von 1,2 bis 1,5 zu 1 erfolgt. Dies bedeutet gegenüber dem bislang im Stand der Technik praktizierten Vorgehen, bei welchem ein überstöchiometrisches Verhältnis von 1,8 bis 2 zu 1 vorgesehen ist, eine wesentliche Einsparung an Neutralisationsmittel. Hierdurch wiederum sind Kostenfolgen vermieden, die einerseits aus der Bereitstellung der erforderlichen Menge an Neutralisationsmittel und andererseits aus der bei erhöhter Zugabemenge resultierenden erhöhten Menge an zu entsorgendem Reaktionsprodukt herrühren. Dies wirkt sich sowohl günstig auf die wirtschaftliche Seite der Abfallverbrennung als auch, was heutzutage von erheblicher Bedeutung ist, auf die hieraus resultierende Umweltbelastung aus.

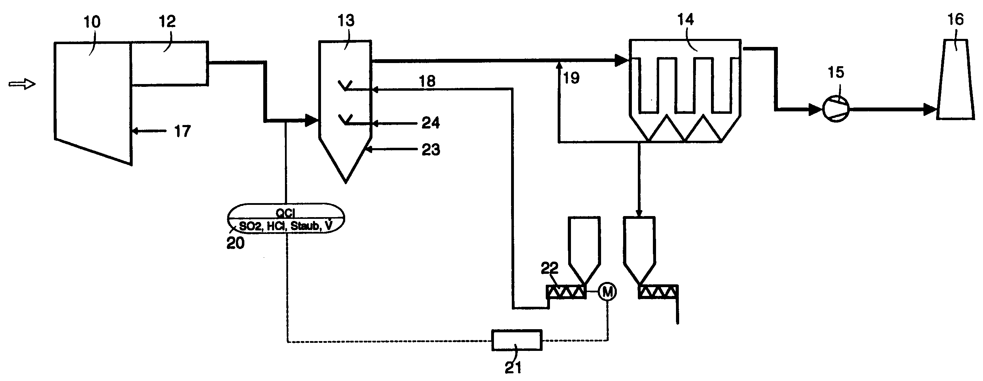

Eine Einrichtung zur trockenen Reinigung von Rauchgas, dargestellt in der einzigen Figur, entsprechend dem vorstehend beschriebenen Verfahren, bei welcher vorzugsweise Kalk als Neutralisationsmittel zum Einsatz kommt, besitzt einen Verbrennungsraum 10, dem Müll zugeführt wird, einen Kessel 12 zur Wärmenutzung, einen Reaktor 13 zur Rauchgaskühlung mit Wasser und zur Neutralisationsmittelverteilung im Rauchgas, Filtereinrichtung 14 zur Abscheidung von Neutralisationsmittel, Staub sowie der sauren Schadgase in der gebildeten Filterschicht, einen Saugzug 15 zur Überwindung der Strömungswiderstände und einen Kamin 16 zur Abführung der Abgase in die Umgebung. Dabei sind die einzelnen Aggregate durch Abgaskanäle verbunden. An verschiedenen Stellen der Anlage gibt es Speiseöffnungen zur Zuführung von Neutralisationsmittel und/oder einer Chlorverbindung. Bevorzugte Einspeisestellen 17, 18 sind im Verbrennungsraum 10 und im Reaktor 13 vorgesehen. Ein Teil des Reaktionsprodukts wird rezirkuliert. Das sogenannte Rezirkulat wird hinter dem Kessel 12, vorzugsweise an einer Einspeisestelle 19 vor dem Filter 14 zugegeben. Das nicht zur Rezirkulation vorgesehene Filterprodukt wird abgefahren und deponiert oder entsorgt. Das Wasser zur Rauchgaskühlung wird dem Reaktor an der Stelle 24 zugegeben.

Im Rauchgaskanal hinter dem Kessel sind Meßeinrichtungen 20 zur kontiniurlichen Ermittlung der Schadstoffgehalte im Abgas sowie zur Erfassung des Volumenstroms installiert. Die erhaltenen Meßwerte werden in einer Rechnereinheit verarbeitet. Diese regelt in erfindungsgemäßer Weise die Zufuhr des Neutralisationsmittels mit Hilfe geeigneter Dosiervorrichtungen 22 sowie die Zufuhr 17, 23 von Chlorverbindungen bei einem

$$C_{HCl}/C_{SO_2}\text{-Verhältnis}$$

<0,8, vorzugsweise <1.

**Patentansprüche**

1.  Verfahren zur trockenen und quasitrockenen Reinigung von chlorwasserstoffhaltigem Rauchgas aus der Abfallverbrennung, durch Abscheidung von Chlorwasserstoff oder Chlorwasserstoff und anderen sauren Bestandteilen aus dem Rauchgas, wie Schwefelverbindungen, unter Zugabe von kalkhaltigem Neutralisationsmittel, <u>dadurch gekennzeichnet</u>, daß die Istwerte des Schadstoffgehalts des Rauchgases sowie dessen Volumenstroms vor der Reinigung bestimmt werden und daß gemäß der Beziehung

$$\dot{m}_N = F * ((0{,}97 * C_{HCl} * 100 / C_{Cl^- i.R.}) - C_{HCl} - 0{,}84 * C_{SO_2} - C_{Staub}) * \dot{V} * 10^{-6} \qquad (I)$$

mit:

$\dot{m}_N$ = Dosiermenge an Neutralisationsmittel in kg/h,
$C_{Cl^- i.R.}$ = vorgegebener Chloridgehalt im Reaktionsprodukt (Masse-%),
$F$ = Stoffaktor für $Ca(OH)_2$ = 1; für $CaO$ = 0,76,
$C_{HCl}$ = Konzentration an HCl im Abgas in mg/m³,
$C_{SO_2}$ = Konzentration an $SO_2$ im Abgas in mg/m³,
$C_{Staub}$ = Konzentration an Staub im Abgas in mg/m³,
$\dot{V}$ = Volumenstrom des Abgases in m³/h,

in welcher die ermittelten Istwerte berücksichtigt werden, die jeweilige Zugabemenge an Neutralisationsmittel, vorzugsweise an $Ca(OH)_2$, festgelegt wird.

2. Verfahren nach Anspruch 1, dadurch gekennzeichnet, daß die Istwerterfassung und die den Istwerten zugeordnete Zuführung des Neutralisationsmittels selbsttätig erfolgen.

3. Verfahren nach Anspruch 1 oder 2, dadurch gekennzeichnet, daß die Zugabemenge an Kalk als Neutralisationsmittel derart dosiert wird, daß im Reaktionsprodukt der Rauchgasreinigung ein Chloridgehalt von 14 bis 25 Masse-%, vorzugsweise von 16 bis 20 Masse-% sowie ein $Ca(OH)_2$-Gehalt von 5 bis 25 Masse-%, vorzugsweise von 10 bis 20 Masse-%, vorliegt und daß im Rauchgas vor dessen Reinigung das Verhältnis von HCl zu $SO_2$ größer 0,8 , vorzugsweise größer 1 beträgt.

4. Verfahren nach Anspruch 3, dadurch gekennzeichnet, daß zur Einhaltung des geforderten Verhältnisses von $HCl/SO_2$ dem zu verbrennenden Abfall und/oder dem Rauchgas vor dessen Reinigung Chlorverbindungen, z. B. als HCl, zugegeben wird.

5. Verfahren nach Anspruch 4, dadurch gekennzeichnet, daß zur Einhaltung des geforderten Verhältnisses von $HCl/SO_2$ dem zu verbrennenden Abfall und/oder dem Rauchgas vor dessen Reinigung $CaCl_2$ zugeführt wird, das aus dem Endprodukt gewonnen wird.

6. Verfahren nach einem der vorherigen Ansprüche, dadurch gekennzeichnet, daß die zugeführte Menge an Neutralisationsmittel entsprechend dem Konzentrationsverhältnis von HCl zu $SO_2$ im Abgas modifiziert wird gemäß der Beziehung

$$\dot{m}_{Nmod.} = \dot{m}_N * \left(\frac{C_{HCl}}{C_{SO_2}}\right)^{-n} \qquad (II)$$

mit $\quad 0 < n < 1$, vorzugsweise n = 0,2 bis 0,4.
$C_{HCl}$ = Konzentration an HCl im Abgas in $mg/m^3$

$$C_{SO2}$$

= Konzentration an $SO_2$ im Abgas in $mg/m^3$

7. Verfahren nach Anspruch 6, dadurch gekennzeichnet, daß die Modifizierung der Zugabemenge $\dot{m}_N$ vorgesehen ist, wenn das Konzentrationsverhältnis von Chlorwasserstoff zu Schwefeldioxid größer als zwei beträgt.

8. Verfahren nach einem der vorherigen Ansprüche, dadurch gekennzeichnet, daß aus dem Endprodukt der Rauchgasreinigung die chloridhaltigen Verbindungen, insbesondere Calciumchlorid ($CaCl_2$) mit Wasser herausgelöst und mittels anschließender Filterung, z. B. Naßfiltration in einer Filterpresse, gewonnen werden und bei Bedarf in den Verfahrensprozeß eingebracht werden.

## Claims

1. Process for the dry or virtually dry purification of hydrogen chloride-containing flue gas from waste incineration by removal of hydrogen chloride or hydrogen chloride and other acid constituents such as sulphur compounds from the flue gas, with addition of lime-containing neutralizing agents, characterized in that the actual values of the pollutant content of the flue gas and also its volume flow are determined prior to purification and that the respective amount of neutralizing agent, preferably of $Ca(OH)_2$, to be added is determined in accordance with the relationship

$$\dot{m}_N = F*((0.97*C_{HCl}*100/C_{Cl^- i.R})-C_{HCl}-0.84* C_{SO2} -C_{dust})*V*10^{-6} \qquad (I)$$

where:
$\dot{m}_N$ = Amount of neutralizing agent metered in, in kg/h,
$C_{Cl^-}$ i.R. = Prescribed chloride content in the reaction product (% by mass),
F = Material factor, for $Ca(OH)_2$ = 1; for CaO = 0.76,

$C_{HCl}$ = Concentration of HCl in the waste gas in mg/m$^3$,

$$C_{SO_2}$$

= Concentration of SO$_2$ in the waste gas in mg/m$^3$,
$C_{dust}$ = Concentration of dust in the waste gas in mg/m$^3$,
$\dot{V}$ = Volume flow of the waste gas in m$^3$/h, in which the actual values determined are taken into account.

2. Process according to Claim 1, characterized in that the determination of the actual values and the feeding in of the neutralizing agent assigned to the actual values are carried out automatically.

3. Process according to Claim 1 or 2, characterized in that the amount of lime to be added as neutralizing agent is metered in in such a way that the reaction product of the flue gas purification has a chloride content of from 14 to 25% by mass, preferably from 16 to 20% by mass, and also a Ca(OH)$_2$ content of from 5 to 25% by mass, preferably from 10 to 20% by mass, and that the ratio of HCl to SO$_2$ in the flue gas prior to its purification is greater than 0.8, preferably greater than 1.

4. Process according to Claim 3, characterized in that, to maintain the required ratio of HCl/SO$_2$, chlorine compounds, e.g. as HCl, are added to the waste to be incinerated and/or the flue gas prior to its purification.

5. Process according to Claim 4, characterized in that, to maintain the required ratio of HCl/SO$_2$, CaCl$_2$ recovered from the final product is added to the waste to be incinerated and/or the flue gas prior to its purification.

6. Process according to any one of the preceding claims, characterized in that the amount of neutralizing agent fed in is modified according to the concentration ratio of HCl to SO$_2$ in the waste gas in accordance with the relationship

$$\dot{m}_{Nmod.} = \dot{m}_N * \left( \frac{C_{HCl}}{C_{SO_2}} \right)^{-n} \tag{II}$$

where $0 < n < 1$, preferably n = from 0.2 to 0.4.
$C_{HCl}$ = concentration of HCl in the waste gas in mg/m$^3$

$$C_{SO_2} =$$

concentration of SO$_2$ in the waste gas in mg/m$^3$

7. Process according to Claim 6, characterized in that the amount to be added $\dot{m}_N$ is modified if the concentration ratio of hydrogen chloride to sulphur dioxide is greater than 2.

8. Process according to any one of the preceding claims, characterized in that the chloride-containing compounds, in particular calcium chloride (CaCl$_2$), are leached from the final product of flue gas purification and are recovered by means of subsequent filtration, e.g. wet filtration in a filter press, and are introduced if needed into the process.

**Revendications**

1. Procédé pour l'épuration par voie sèche ou semi-sèche de fumées résultant de la combustion de déchets, par séparation du chlorure d'hydrogène ou du chlorure d'hydrogène et d'autres composants acides des fumées, tels que les composés du soufre, réalisés par addition d'agents neutralisants contenant de la chaux, caractérisé par le fait qu'avant l'épuration on détermine les valeurs réelles des éléments polluants dans la fumée ainsi que leur débit et par le fait que l'on fixe la quantité correspondants d'agent neutralisant, de préférence de Ca(OH)$_2$, conformément à la relation

$$m_N = F*((0{,}97*C_{HCl}*100/C_{Cl\text{-i.R.}}) - C_{HCl} - 0{,}84*C_{SO2} - C_{Staub})*V*10^{-6} \tag{I}$$

avec:

mN = Quantité d'agent neutralisant en kg/h,

$C_{Cl-i.R.}$ = Teneur prédéterminée en chlorures dans le produit de réaction (% de la masse),

F = Facteur spécifique au composé pour $Ca(OH)_2$ = 1, pour CaO = 0,76,

$C_{HCl}$ = Concentration en HCl dans les gaz de combustion en $mg/m^3$,

$C_{SO2}$ = Concentration en $SO_2$ dans les gaz de combustion en $mg/m^3$

$C_{Staub}$ = Concentration en poussières dans les gaz de combustion en $mg/m^3$

V = Débit de gaz de combustion en $m^3/h$.

relation qui prend en compte les valeurs réelles déterminées.

2. Procédé selon la revendication 1, caractérisé par le fait que la détermination des valeurs réelles et l'apport d'agents neutralisants en quantité adaptée aux valeurs réelles se déroulent de manière automatique.

3. Procédé selon la revendication 1 ou 2, caractérisé par le fait que la quantité ajoutée de chaux, en tant qu'agent neutralisant, est dosée de manière à obtenir dans le produit de réaction de l'épuration des fumées une teneur en chlorures comprise entre 14 et 25 % de la masse, de préférence entre 16 et 20 % de la masse, et une teneur en $Ca(OH)_2$ comprise entre 5 et 25 % de la masse, de préférence entre 10 et 20 % de la masse, et par le fait que le rapport de HCl à $SO_2$ dans les fumées avant épuration est supérieur à 0,8, de préférence supérieur à 1.

4. Procédé selon la revendication 3, caractérisé par le fait que pour respecter le rapport $HCl/SO_2$ exigé, on ajoute aux déchets à brûler et/ou aux fumées, avant leur épuration, des composés chlorés, par exemple sous forme de HCl.

5. Procédé selon la revendication 4, caractérisé par le fait que pour respecter le rapport $HCl/SO_2$ exigé, on ajoute aux déchets à brûler et/ou aux fumées, avant leur épuration, du $CaCl_2$ obtenu à partir du produit final.

6. Procédé selon l'une des revendications précédentes, caractérisé par le fait que l'on modifie la quantité ajoutée d'agents neutralisants en fonction du rapport de HCl à $SO_2$ dans les fumées, conformément a la relation

$$m_{Nmod.} = m_N * \left(\frac{C_{HCl}}{C_{SO2}}\right)^{-n} \tag{II}$$

avec

0 < n < 1, de préférence n = 0,2 à 0,4.

$C_{HCl}$ = Concentration en HCl dans les gaz de combustion en $mg/m^3$,

$C_{SO2}$ = Concentration en $SO_2$ dans les gaz de combustion en $mg/m^3$.

7. Procédé selon la revendication 6, caractérisé par le fait qu'il est prévu de modifier la quantité ajoutée $m_N$ lorsque le rapport de concentration du chlorure d'hydrogène au dioxyde de soufre est supérieur à deux

8. Procédé selon l'une des revendications précédentes, caractérisé par le fait que l'on récupère dans le produit final résultant de l'épuration des fumées, les composés chlorés, notamment le chlorure de calcium ($CaCl_2$) par dissolution avec de l'eau suivie d'une filtration, par filtration humide dans un filtre à presse, et on l'introduit le cas échéant dans le cycle du procédé.

16

15

14

19

13

18

24

23

12

10

17

22

M

21

QCl
SO2, HCl, Staub, V
20